# EUROPÄISCHE PATENTSCHRIFT

(11) **EP 0 494 367 B1**
(45) Veröffentlichungstag und Bekanntmachung des Hinweises auf die Patenterteilung: **01.03.1995**
(21) Anmeldenummer: 91120107.7
(22) Anmeldetag: 26.11.1991
(51) Int. Cl.: A21C 5/02

(54) **Teigteilmaschine**
Dough dividing machine
Machine à diviser la pâte

(30) Priorität: 07.01.1991 DE 4100243
(43) Veröffentlichungstag der Anmeldung: 15.07.1992
(73) Patentinhaber: Werner & Pfleiderer GmbH, 70469 Stuttgart (DE)
(72) Erfinder: Judex, Helmut, W-7141 Schwieberdingen (DE)

(56) Entgegenhaltungen:
- DE-A- 3 530 724
- FR-A- 1 502 504

## Beschreibung

Die Erfindung betrifft eine Teigteilmaschine nach dem Oberbegriff des Patentanspruches 1.

Bei Teigteilmaschinen mit einem Teilkammerträger, der in einer Reihe nebeneinander angeordnete Teilkammern aufweist, ist das Teilen der Teigstücke nur innerhalb eines bestimmten eng begrenzten Volumenbereiches, in Abhängigkeit der möglichen Hubwegverstellung der Messkolben, möglich.

Soll ein grösserer Gewichtsbereich abgedeckt werden, so ist eine zweite Maschine erforderlich, oder es muss der Teilkammerträger einschliesslich der Messkolben gewechselt werden.

Aus der DE 34 36 258 A 1 ist bereits eine Maschine zum Teilen von Teigstücken mit grossen und kleinen Gewichten bekannt, dessen zylindrischer Teigkammerträger wenigstens mit zwei um 90° versetzt angeordneten Teilkammerreihen ausgerüstet ist, wobei die Teilkammerreihen verschiedene, innerhalb der Teilkammerreihen, jedoch gleiche Teilkammer-Querschnitte aufweisen. Den verschieden grossen Teilkammern sind entsprechend angepasste Messkolben zugeordnet, so dass durch einfaches Verdrehen des Teigkammerträgers um 90° eine andere Teigvolumengrösse abgeteilt werden kann. Ein solcher Teigkammerträger ist relativ kostspielig, da er wenigstens zwei Teilkammerreihen mit den dazugehörigen Messkolben und Antriebselementen aufweisen muss, obwohl nur immer eine Messkammerreihe im Einsatz ist. Ein weiterer Nachteil besteht darin, dass hierbei innerhalb einer Reihe nur gleichgrosse Teigvolumen abgeteilt werden können.

Aus der FR 15 02 504 ist eine Teigteilmaschine bekannt, die einen einzelnen grossen Messkolben aufweist in dem ein kleiner Messkolben frei beweglich angeordnet ist. Der grosse Messkolben kann über einen am Messzylinder an-und abschraubbaren Festsetzblock arretiert werden, so dass dann nur der kleine Messkolben, allerdings nur mit einem verringerten Hub, zur Abteilung von kleinen Teigstücken betrieben werden kann. Das An-und Abschrauben des Festsetzblockes ist relativ zeitaufwendig und bei einem Teilkammerträger mit mehreren Messkammern kaum rationell einsetzbar.

Die Erfindung geht von einer Teigteilmaschine wie sie in der DE 35 30 724 C1 beschrieben ist aus, die einen Teilkammerträger aufweist, der mit seiner Stirnseite gegenüber dem Auslass einer Teigzuführung hin- und herbeweglich ist und in dessen in einer Reihe nebeneinander angeordneten Teilkammern sich je ein Messkolben befindet, wobei nach Bedarf eine oder mehrere Teilkammern ausser Betrieb setzbar sind. Dabei soll das Problem gelöst werden, dass innerhalb einer Teilkammerreihe wahlweise grosse und/oder kleine Teigvolumen abgeteilt werden können.
Der Erfindung liegt die Aufgabe zugrunde, dieses Problem ohne ein zeitaufwendiges Umrüsten oder gar Auswechselung von Teilen oder Baugruppen zu realisieren.

Diese Aufgabe wird erfindungsgemäss durch die im Kennzeichnungsteil des Patentanspruches 1 angegebenen Merkmale gelöst.

Dabei können dem jeweiligen Bedarf entsprechend innerhalb einer Teilkammerreihe jeweils mehrere unterschiedliche Betriebszustände durch einfaches Verdrehen des kleinen und/oder grossen Messkolbens in beliebiger Reihenfolge und Teilkammerabständen schnell und unproblematisch realisiert werden. Eine Veränderung des Antriebes für die Messkolben bei deren Verstellung ist dabei nicht erforderlich.

Ferner ist eine sichere Führung des kleinen Messkolbens in der Kolbenbüchse gegeben sowie eine sichere Verriegelung dieser beiden Teile miteinander zu einem grossen Messkolben durch einfache Verdrehung der Teile zueinander bzw. eine Ausserbetriebsetzung einzelner Messkammern gegeben.

In einer weiteren Ausgestaltung der Erfindung nach Anspruch 2 ist eine einfache herstellbare Führung für den kleinen Messkolben in der Kolbenbüchse gegeben und nach Verdrehen der Kolbenbüchse um 180° das Zusammenwirken des kleinen Messkolbens mit der Kolbenbüchse als grosser Messkolben gesichert.

Durch die Merkmale des Anspruches 3 ist gesichert, dass jederzeit sicher kleine oder grosse Teigvolumen aus der jeweiligen Teigteilkammer ausgestossen werden.

Die Erfindung wird nachstehend anhand einer Zeichnung und zwei Ausführungsbeispielen für die Verriegelung der Doppel-Messkolben näher beschrieben. Es zeigt
- Fig. 1: einen senkrechten Schnitt durch eine Teigteilmaschine.
- Fig. 2: den Teilkammerträger 1 mit zurückgeschobenen Messkolben 6 als Einzelheit im Schnitt dargestellt.
- Fig. 3: eine Draufsicht gemäss Fig. 1 mit teilweise zurückgeschobenen kleinen Messkolben 62 innerhalb einer Teilkammer 51.
- Fig. 4: eine weitere Verriegelungsmöglichkeit des Doppel-Messkolbens, in einer Seitenansicht.
- Fig. 5: den Teilkammerträger 1 (gegenüber der Fig. 1 um 90° nach unten gedreht) in der Ausstossstellung.
- Fig. 6: eine Seitenansicht des Teilkammerträgers 1 von rechts her gesehen.

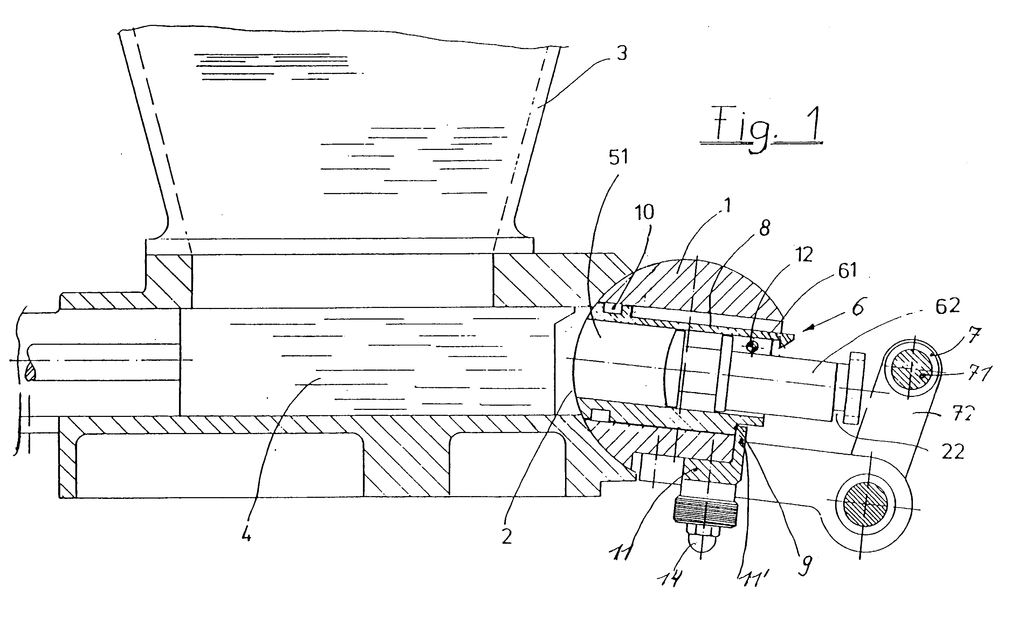

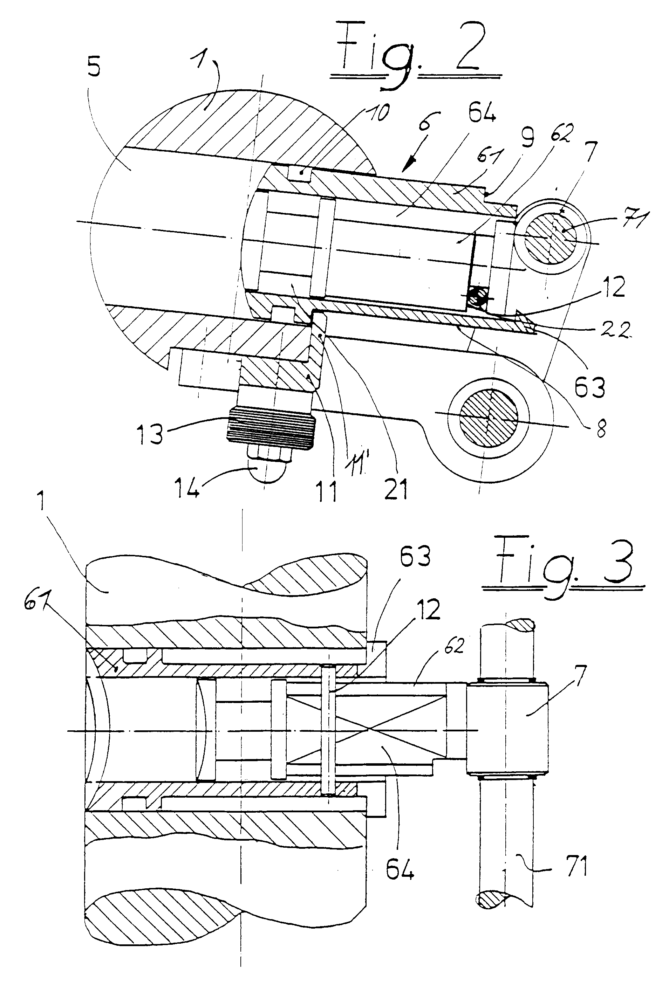

Die aus Fig. 1 ersichtliche Teigteilmaschine weist einen Teilkammerträger 1 auf, der gegenüber dem Auslass 2 einer Teigzuführung hin- und herbeweglich ist. Die Teigzuführung besteht im Beispiel aus einem Teigtrichter 3 sowie einem Teigförderkolben 4, der sich in einer unterhalb des Teigtrichters 3 befindlichen Kammer vor- und zurückbewegt. Der vom Teigförderkolben 4 bei dessen Rückwärtshub aus dem Teigtrichter 3 angesaugte Teig wird beim Vorwärtshub in die Teilkammern 5 entsprechend Fig. 2 bzw. 51 entsprechend Fig. 1 des Teilkammerträgers 1 gepresst. Die Teilkammern 5 sind in einer Reihe nebeneinander (in Fig. 7 dargestellt) im Teilkammerträger 1 angeordnet.

Jede von ihnen weist einen fliegend angeordneten Messkolben 6 auf, der als Doppel-Messkolben ausgebildet ist. Der äussere Hauptkolben ist (analog DE-PS 35 30 724) als über einen Anschlag 11 mit dem Teilkammerträger 1 verriegelbare Kolbenbüchse 61 ausgebildet, die wiederum wahlweise mit dem inneren kleinen Messkolben 62 wie nachfolgend des näheren erläutert, verriegelbar ist. An der Rückseite der kleinen Messkolben 62 greifen die Rollen 7 der Auswerferstange 71, die über zwei schwenkbare Hebel 72 am Teilkammerträger 1 befestigt ist, an.

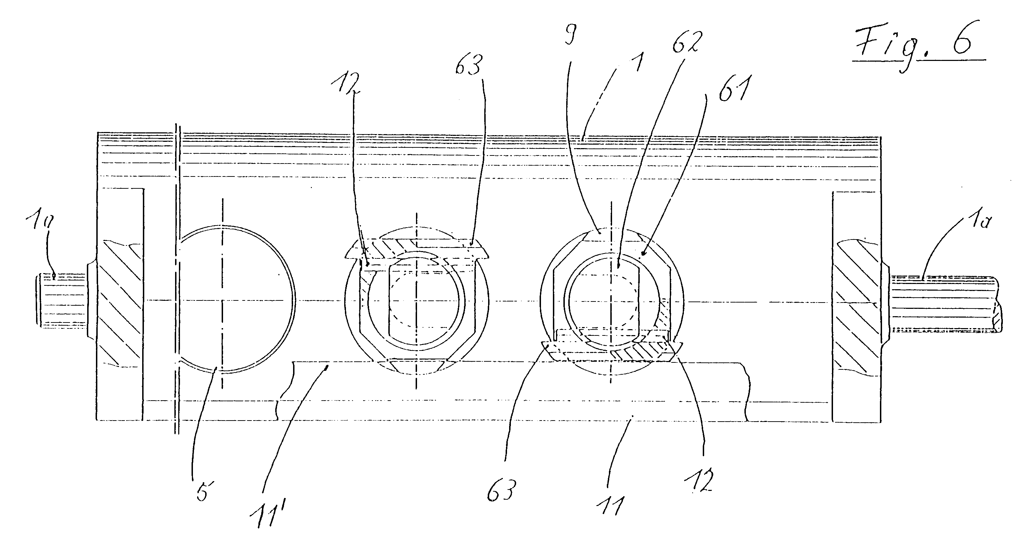

Mittels der Auswerferstange 71 werden die Messkolben 6 bzw. die kleinen inneren Messkolben 62, nachdem die Teilkammern 5 bzw. 51 mit Teig gefüllt und durch eine 90° Drehung des Teilkammerträgers 1 mit ihrer Mündung nach unten gerichtet sind, bis in ihre mit der Stirnseite des Teilkammerträgers 1 bündigen Stellung bewegt (Fig. 5), wobei der Teig aus den Teilkammern 5 und/oder 51 ausgestossen und beim Zurückschwenken des Teilkammerträgers 1 von der Vorderseite der Messkolben 6 und/oder 62 abgestreift wird.

Die Rollen 7 der Auswerferstange 71 wirken als rückseitige Anschläge für die Messkolben 62. Über eine Verstellung des Schwenkbereiches der Hebel 72 kann dabei der Hubweg der Messkolben 6 und/oder Messkolben 62 verändert werden, sodass innerhalb der unterschiedlich grossen Teilkammern 5 bzw. 51 nochmals eine Einstellung des aufzunehmenden Teigvolumens gegeben ist. Einzelheiten über die Verstellung der Schwenkbewegung und des Antriebes der Auswerferstange 71 sind in der Zeichnung nicht näher dargestellt.

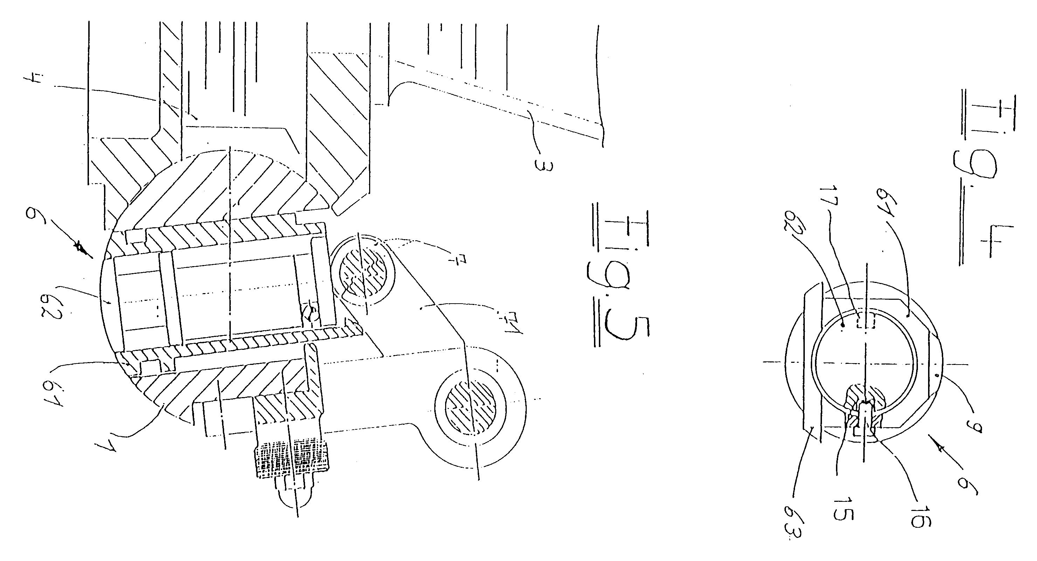

Wie der Fig. 3 entnehmbar ist, sind die kleinen inneren Messkolben 62 am Umfang jeweils mit einer sich achsparallel erstreckenden Abflachung 64 versehen, die eine dem grössten Hub entsprechende Länge hat. Nach Massgabe dieser Abflachung 64 ist im hinteren Ende der Kolbenbüchse 61 ein Bolzen 12 befestigt, der die radiale Verdrehung des Messkolbens 62 bei seiner Hubbewegung innerhalb der Teilkammer 51 verhindert. Diametral zur Abflachung 64 ist im hinteren Ende des Messkolbens 62 eine Nut 22 eingeschnitten, die mit der Abflachung 64 verbunden ist. Hierdurch ist es möglich, den Messkolben 62 bzw. die Kolbenbüchse 61 (bei bündiger Stellung beider Teile) um 180° zu verdrehen, sodass nach der Verdrehung eines der beiden Teile um 180°der Bolzen 12 in die Nut 22 eingreift und somit die Kolbenbüchse 61 mit dem Messkolben 62 zum Messkolben 6 verriegelt wird.

Somit ist es auf einfache Weise möglich innerhalb einer Teilkammerreihe wahlweise mehrere unterschiedliche Betriebszustände zu realisieren. In Fig. 1 ist der Betriebszustand für die Abteilung von kleinen Teigstücken gezeigt. Hier wird die kleine Teilkammer 51 durch den Teigförderkolben 4 gefüllt. Der Ausstoss aus der kleinen Teilkammer 51 erfolgt nach erfolgter Schwenkung um 90° nach unten durch den kleinen Messkolben 62. Fig. 2 zeigt die grosse Teilkammer 5 bei zurückgeschobenen Messkolben 6 (Kolbenbüchse 61 und kleine Messkolben 62 sind durch den in der Nut 22 befindlichen Bolzen 12 miteinander verriegelt) für die Abteilung von grossen Teigstücken. Die ausser Betriebsetzung einzelner Teilkammern 5 kann, von der in Fig. 1 gezeigten arretierten Stellung der Kolbenbüchse 61 ausgehend, durch Verdrehung des kleinen Messkolbens 62 um 180°, so dass die Nut 22 mit oben befindlichen Bolzen 12 der Kolbenbüchse 61 in Eingriff kommt, erfolgen. Diese Stellung ist in der Zeichnung nicht gezeigt.

In Fig. 1 ist die Kolbenbüchse 61 über den Winkelanschlag 11 im Teilkammerträger 1 arretiert. Der nach oben weisende Schenkel 11' des Winkelanschlages 11 liegt dabei fest an der Kante 9 der Kolbenbüchse 61 an. Stirnseitig (zum Auslass 2 hin) weist die Kolbenbüchse 61 dabei zur Kontur des Teilkammerträgers 1 eine bündige Stellung auf.

Der kleine Messkolben 62 ist hierbei innerhalb der Teilkammer 51 frei bewegbar. In Fig. 1 befindet sich der Messkolben 62 auf den durch den Teigdruck bewirkten Rückwärtshub, der beim Antreffen an die Rolle 7, der bereits zurückgefahrenen Auswerferstange 71, begrenzt wird und es können somit kleine Teigvolumen in dieser Teilkammer abgeteilt werden.

In Fig. 2 ist, nachdem durch Lösen der Rändelmutter 13 bis zur Hutmutter 14 der Winkelanschlag 11 gelöst wurde, die um 180° gedrehte Kolbenbüchse 61 gezeigt. Durch diese Verdrehung rastet der Bolzen 12 in die Nut 22 des Messkolbens 62 ein, sodass nun beide Teile des Doppel-Messkolbens fest miteinander zum Messkolben 6 verriegelt sind, der innerhalb der Teilkammer 5 aufgrund der jetzt nach unten weisenden Abflachung 8 über den Winkelanschlag 11 frei beweglich ist. Die Hubendpunkte werden dabei einmal durch die Rolle 7 und zum anderen durch den an der Kolbenbüchse 61 befindlichen Bund 63 begrenzt. Es können nunmehr grosse Teigvolumen in dieser Teilkammer 5 abgeteilt werden. Mit 10 bzw. 21 sind die Teignuten im Messkolben 6 bzw. Messkolben 62 bezeichnet.
Sofern es gewünscht ist eine oder mehrere der Teilkammern 5 innerhalb einer Teilkammerreihe ausser Betrieb zu setzen, so ist es, von der verriegelten Stellung der Kolbenbüchse 61 aus Fig. 1 ausgehend nur erforderlich, den kleinen Messkolben 62 um 180° zu verdrehen, sodass der Bolzen 12 in die Nut 22 einrastet (diese Stellung ist in der Zeichnung nicht dargestellt).

Eine weitere Möglichkeit der Verriegelung des Doppel-Messkolbens ist in Fig. 4 gezeigt. Dabei ist die Kolbenbüchse 61 mit einer Zapfenschraube 16 versehen, deren Zapfen in eine den grössten Hub entsprechende Längsnut 15 des Messkolbens 62 eingreift. Nach Verdrehung der Kolbenbüchse 61 oder des Messkolbens 62 um 180° rastet der Zapfen der Zapfenschraube in eine Sackbohrung 17 des Messkolbens 62 ein, so dass auch hier eine Verriegelung der Kolbenbüchse 61 mit dem Messkolben 62 zum Messkolben 6 gegeben ist und drei Betriebszustände möglich sind.

In Fig. 6 sind die in einer Reihe nebeneinander angeordneten Teilkammern 5 (hier nur 3 dargestellt) im Teilkammerträger 1 erkennbar. Der Teilkammerträger 1 ist über die Lagerzapfen 1a schwenkbar in einem nicht dargestellten Maschinengestell gelagert.
Wie der Fig. 6 weiter entnehmbar ist, ist in der äusseren rechten Teilkammer 5 analog der Fig. 2 der grosse Messkolben 6 (die Kolbenbüchse 61 ist mit dem kleinen Messkolben 62 verriegelt und durch die nach unten weisende Abflachung 8 frei über den Schenkel 11' des Winkelanschlages 11 bewegbar) in der Teilkammer 5 betreibbar. In der 2. Teilkammer von rechts ist die Kolbenbüchse 61 (gemäss Fig. 1) über den Winkelanschlag 11 arretiert, so dass hier der kleine Messkolben 62 in der Teilkammer 51 der Kolbenbüchse 61 bewegt wird. Weiterhin ist eine Teilkammer 5 ohne Doppel-Messkolben 6 dargestellt. Hieraus wird nochmals deutlich, dass die Teilkammern in beliebiger Reihenfolge in unterschiedliche Betriebszustände versetzt werden können.

## Patentansprüche

1. Teigteilmaschine mit einem Teilkammerträger (1), der mit seiner Stirnseite gegenüber dem Auslaß (2) einer Teigzuführung hin-und herbeweglich ist und in dessen in einer Reihe nebeneinander angeordneten Teilkammern (5) sich je ein Meßkolben (6) befindet, wobei nach Bedarf eine oder mehrere Teilkammern (5) ausser Betrieb setzbar sind, indem die darin befindlichen Meßkolben (6) nach Verdrehung um 180° in ihrer mit der Stirnseite des Teilkammerträgers bündigen Stellung mittels eines an dem Teilkammerträger (1) lösbar befestigten und in den Meßkolben eingreifenden Anschlag (11) verriegelt werden, dadurch gekennzeichnet, daß die Messkolben (6) als Doppel-Meßkolben ausgebildet sind, wobei Kolbenbüchsen (61) die äußeren mit dem Teilkammerträger (1) verriegelbare Hauptkolben bilden, in denen innere kleine Messkolben (62) eingebracht sind, die am Umfang jeweils mit einer sich achsparallel der Länge des größten Hubes entsprechenden Abflachung (64) sowie an ihren hinteren Enden an ihrem äußeren Umfang mit jeweils einer radial verlaufenden Nut (22) versehen sind und einzeln wahlweise über die Nut (22) über einen die Kolbenbüchse (61) jeweils am hinteren Ende durchgreifenden Bolzen (12) verriegelbar oder nach Verdrehung nach Maßgabe der Abflachung (64) als kleiner Meßkolben betreibbar sind.

2. Teigteilmaschine nach Patentanspruch 1, dadurch gekennzeichnet, daß die Kolbenbüchsen (61) jeweils mit einer Zapfenschraube (16) versehen sind, deren Zapfen jeweils in einer den größten Hub entsprechenden Längsnut (15) der Meßkolben (62) eingreifen.

3. Teigteilmaschine nach Anspruch 1 oder 2, dadurch gekennzeichnet, daß für den Ausstoß des Teiges aus den Teilkammern (5) und/oder Teilkammern (51) die Rollen (7) der Auswerferstange (71) an den Rückseiten der kleinen Meßkolben (62) angreifen.

## Claims

1. Dough-dividing machine with a dividing chamber carrier (1), which is movable to and fro by its end face relative to the outlet (2) of a dough feed and in each of the dividing chambers (5) of which a respective metering piston (6) is disposed, the dividing chambers (5) being arranged one beside the other in a row, wherein one or more of the dividing chambers (5) can be put out of operation according to need in that the metering pistons (6) disposed therein are after rotation through 180° latched in their setting flush with the end face of the dividing chamber carrier (1) means of an abutment (11), which is detachably fastened at the dividing chamber carrier (1) and engages into the metering piston, characterised thereby, that the metering pistons (6) are constructed as double metering pistons, wherein piston bushings (61) form the outer main pistons, which are latchable to the dividing chamber carrier (1) and into which inner small metering pistons (62) are introduced, which are each provided at the circumference with a respective flattening (64), which is parallel to the axis and corresponds to the length of the greatest stroke, as well as at their rear ends with a respective radially extending groove (22) and which is selectably individually to be either latchable by way of the groove (22) by way of a pin (12) passing through the piston bushing (61) each time at the rear end or operable as small metering piston after rotation in accordance with the flattening (64).

2. Dough-dividing machine according to patent claim 1, characterised thereby, that the piston bushings (61) are each provided with a respective trunnion screw (16), the spigots of which each time engage into a longitudinal groove (15), which corresponds to the greatest stroke, of the metering pistons (62).

3. Dough-dividing machine according to claim 1 or 2, characterised thereby, that for the ejection of the dough out of the dividing chambers (5) and/or dividing chambers (51), the rollers (7) of the ejector rod (71) engage at the rear sides of the small metering pistons (62).

## Revendications

1. Machine à diviser la pâte, comprenant un support de chambres de partage de pâte ou porte-chambres (1) qui, par son côté frontal, peut être animé d'un mouvement de va-et-vient par rapport à la sortie (2) d'une amenée de pâte et dont les chambres de partage (5), juxtaposées en une rangée, contiennent chacune un piston doseur (6), machine dans laquelle, selon les besoins, une ou plusieurs chambres de partage (5) peuvent être mises hors service du fait que les pistons doseurs (6) qu'elles contiennent, après une rotation de 180° à leur position d'alignement avec le côté frontal du porte-chambres, sont verrouillés au moyen d'une butée (11) fixée amovible au porte-chambres (1) et s'engageant dans les pistons doseurs, caractérisée en ce que les pistons doseurs (6) sont réalisés comme des doubles pistons doseurs possédant des chemises de piston (61) qui constituent des pistons principaux externes, lesquels sont verrouillables avec le porte-chambres (1), à l'intérieur desquels sont disposés de petits pistons doseurs internes (62) pourvus chacun, à la périphérie, d'un méplat (64) s'étendant parallèlement à l'axe et dont la longueur correspond à la course maximale, ainsi que, à leurs extrémités arrière, à leur périphérie extérieure, d'une rainure (22) orientée radialement, les petits pistons (62) étant verrouillables individuellement et sélectivement, par la rainure (22), au moyen d'une cheville (12) traversant l'extrémité arrière de la chemise de piston (61) correspondante, ou pouvant être utilisés, après rotation et dans la mesure permise par le méplat (64), comme de petits pistons doseurs.

2. Machine à diviser la pâte selon la revendication 1, caractérisée en ce que les chemises de piston (61) sont pourvues chacune d'une vis (16) à téton,dont le téton pénètre dans une rainure longitudinale (15) du piston doseur (62), rainure dont la longueur correspond à la course maximale.

3. Machine à diviser la pâte selon la revendication 1 ou 2, caractérisée en ce que, pour l'éjection de la pâte hors des chambres de partage (5 et/ou 51), des galets (7) d'une barre d'éjection (71) attaquent les côtés arrière des petits pistons doseurs (62).
